# EUROPÄISCHE PATENTANMELDUNG

(11) **EP 1 479 505 A1**
(43) Veröffentlichungstag der Anmeldung: **24.11.2004**
(21) Anmeldenummer: 04011137.9
(22) Anmeldetag: 11.05.2004
(51) Int. Cl.: B29C 63/02, B05C 5/02

(54) **Vorrichtung zum Kaschieren von Profilen**

(30) Priorität: 22.05.2003 DE 10323213
(71) Anmelder: THYSSEN POLYMER GMBH, 94327 Bogen (DE)
(72) Erfinder: Schötz, Manfred, 94374 Schwarzach (DE); Hainz, Robert, 94336 Hunderdorf (DE)

(57) **Zusammenfassung**

Die Erfindung betrifft eine Vorrichtung (V) zum Kaschieren von Profilen (P), beispielsweise Kunststoff-Fensterprofilen, wobei gleichzeitig, durch einen einzigen Arbeitsgang, mehrere Profilseiten, beispielsweise von L- oder Z-Profilen, kaschiert werden können, indem ein verstellbarer Schieber (4) in der Auftragsvorrichtung (V) für den Haftvermittler (8) vorgesehen ist, der eine leimfreie Zone (Z3) zwischen den Kaschierfolien einrichtet.

## Beschreibung

Die Erfindung betrifft eine Vorrichtung zum Kaschieren von Profilen mit einem Rüstsystem für die Folienkaschierung mit zwei justierbaren Schiebem für die Einstellung der Haftvermittlerauftragsbreite, einer Profilzu- und Profil-abführungsvorrichtung, sowie mindestens einer Einrichtung für die Haftvermittlerzuführung und -auftragung.

Derartige Vorrichtungen finden vor allem in der Profilherstellung und der Fensterbautechnik Anwendung. Mittels solcher Vorrichtungen werden Kaschierfolien auf eine oder mehrere Profilseiten aufgebracht. Dazu dienen spezielle Haftvermittler, die der Profiloberfläche zugeführt werden und anschließend, nach Zuführung der Kaschierfolie, wird diese durch eine Anzahl mit vorbestimmten Druck beaufschlagte Andruckrollen fest auf die Profiloberfläche gepresst Nachdem eine Seite des Profils auf diese Weise kaschiert ist, erfolgt ein zweiter Durchlauf desselben durch die Vorrichtung, wobei die zweite zu kaschierende Seite des Profils ebenfalls mit Haftvermittler und anschließend mit einer Kaschierfolie komplettiert wird.

Die Durchführung einer solchen ein- oder mehrseitigen Kaschierung von Profilen ist mit verschiedenen Nachteilen behaftet. So fallen regelmäßig erhebliche Rüst- und Umrüstzeiten mit der Einstellung einer großen Anzahl Andruckrollen an. Dabei müssen die Andruckrollen (80 bis 100 Stück für jedes Profil) in horizontaler, vertikaler und axialer Richtung stets von Hand an die einzelnen Profilkonturen angepasst, eingestellt und justiert werden. Bei zweiseitig zu kaschierenden Profilen fällt dieser Umrüstvorgang doppelt an, da jede der zu kaschierenden Seiten des Profils einzeln gefertigt und gerüstet werden muß. Dies erfordert einen erheblichen Arbeits- und Zeitaufwand, der das Produkt verteuert.

Der Erfindung liegt daher die Aufgabe zugrunde, eine Vorrichtung zum mehrseitigen Kaschieren von Profilen zu schaffen, die weniger Rüstzeiten erfordert und flexibel ist, d.h. ohne großen Aufwand an verschiedene Profilformen und Kaschierfolien angepasst werden kann.

Durch die Erfindung, wie sie in den Ansprüchen beschrieben ist, werden diese Nachteile vermieden. Einerseits werden Arbeitsgänge, bei zwei zu kaschierenden Profilseiten einer, eingespart, da an Stelle von zwei Arbeitsgängen nur noch einer erforderlich ist. Dies ist ermöglicht, durch das Einsetzen eines zusätzlichen sogen. Schiebers, der eine haftvermittlerfreie Zone an dem Auftragsschlitz der Vorrichtung schafft und es ermöglicht gleichzeitig auf zwei unterschiedlichen Seiten des Profils, z.B. einem L-oder Z-Profil, innen oder außen, ohne zusätzlichen Rüstaufwand, zwei von einander getrennte Kaschierfolien aufzutragen. Andererseits wird durch eine vertikale Profilführung anstelle der bisherigen horizontalen Führung die Umrüstung erleichtert und ein sicheres Andrücken der Kaschierfolie auf die Profiloberfläche ermöglicht. Der Rüstsatz mit seinen Andruckrollen kann dabei sogar stehen bleiben. Eine evtl. notwendige Umrüstung ist in wenigen Minuten zu bewältigen.

Die Erfindung ist nachstehend anhand eines in den Abbildungen dargestellten Ausführungsbeispieles näher erläutert.

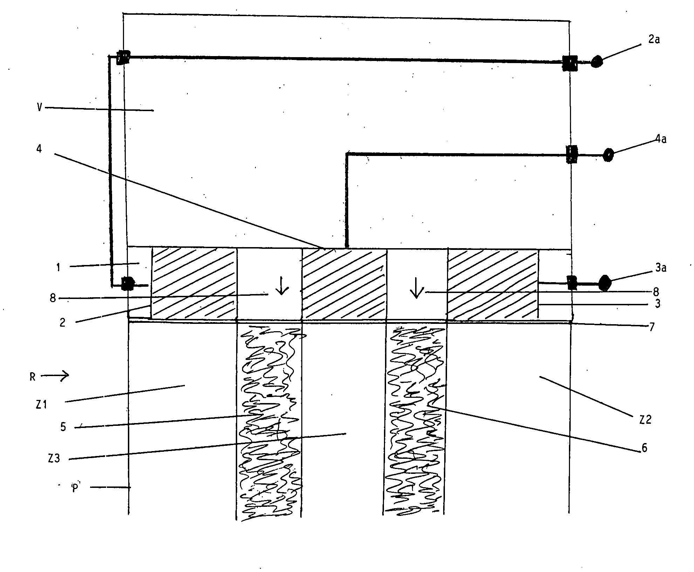

Die Abbildung zeigt eine schematische Anordnung.

Die Abbildung zeigt eine Vorrichtung V die das Profil P in vertikaler Stellung durchläuft und von dem Rüstsatz R in bekannter Weise übemommen wird. In der Vorrichtung V sind in der Zuführungseinrichtung 1, über dem Auftragsschlitz 7 für Haftvermittler 8, mehrere, im dargestellten Ausführungsbeispiel drei Schieber vorgesehen, von denen die beiden justierbaren Schieber 2 und 3 die durchlaufenden Folien 5 und 6 links bzw. rechts begrenzen. Zwischen den beiden Folien 5 und 6 ist ein weiterer einstellbarer Schieber 4 angeordnet, der, wie die beiden anderen Schieber 2 und 3, den Haftvermittler 8 nicht auf das Profil P bzw. die Kaschierfolien 5 und 6 gelangen lässt, also auf dem Profil P eine haftvermittlerfreie Zone Z3 belässt; so wie die beiden Schieber 2 und 3 auch.

Die Justierung der beiden Schieber 2 und 3 erfolgt über die Stellglieder 2a und 3a, während der mittlere Schieber 4 über das Stellglied 4a betätigt wird. Dadurch können zwei getrennte Folien 5 und 6 auf beiden Seiten des Profils P gleichzeitig, einseitig innen oder einseitig außen ohne zusätzlichen Rüstaufwand aufgebracht werden. Derzeit sind Auftragsbreiten für den Haftvermittler 8 jeweils von etwa 0 bis 150 mm auf den Folien 5,6 bzw. dem Profil P möglich. Die Flussrichtung des Haftvermittlers 8 ist mit ↓ angegeben.

Wegen des Durchlaufs des Profils P durch die Vorrichtung V in vertikaler Stellung sind auch Profilformen, wie z.B. L oder Z gleichzeitig ein- oder beidseitig kaschierbar.

### Bezugszeichenliste

- **1.**: Zuführungseinrichtung
- **2.**: Schieber
- **3.**: Schieber
- **4.**: Schieber (zusätzlich)
- **5.**: Folie
- **6.**: Folie
- **7.**: Auftragsschlitz für Haftvermittler
- **8.**: Haftvermittler

- **P**: Profil
- **R**: Rüstsatz
- **V**: Vorrichtung
- **Z**: haftvermittlerfreie Zone
- **↓**: Flussrichtung Haftvermittler 8

## Patentansprüche

1. Vorrichtung zum Kaschieren von Profilen mit einem Rüstsystem für die Folienkaschierung mit zwei justierbaren Schiebern für Einstellung der Haftvermittlerauftragsbreite, einer Profilzu- und Profil-abführungsvorrichtung, sowie mindestens einer Einrichtung für die Haftvermittlerzuführung und -auftragung, **dadurch gekennzeichnet, dass** auf der Zuführungseinrichtung (1) der Vorrichtung (V) zwischen zwei Schiebem (2 und 3) ein verstellbarer Schieber (4) zur Erzeugung einer haftvermittlertreien Zone zwischen zwei Kaschierfolien (5,6) auf dem zu kaschierenden Profil (P) vorgesehen ist.

2. Vorrichtung nach Anspruch 1, **dadurch gekennzeichnet, dass** Stellglieder (2a,3a,4a) für die einzelnen Schieber (2,3,4) vorgesehen sind.

3. Vorrichtung nach Anspruch 1 und 2, **dadurch gekennzeichnet, dass** das Profil (P) mittels der Vorrichtung gleichzeitig auf zwei Seiten kaschierbar ist.

4. Vorrichtung nach Anspruch 1 bis 3, **dadurch gekennzeichnet, dass** das Profil (P) vertikal durch die Vorrichtung geführt ist.

5. Vorrichtung nach Anspruch 1 bis 4, **dadurch gekennzeichnet, dass** für jede Profilart ein kompletter, austauschbarer Rüstsatz (R) vorgesehen ist.
